# EUROPEAN PATENT APPLICATION

(11) **EP 4 650 196 A1**
(43) Date of publication of application: **19.11.2025**
(21) Application number: 23915825.6
(22) Date of filing: 28.12.2023
(51) Int. Cl.: B60H 1/00, B60H 1/32

(54) **VALVE SYSTEM AND THERMAL MANAGEMENT SYSTEM**

(30) Priority: 10.01.2023 CN 202320078683 U
(71) Applicant: Valeo Systemes Thermiques, 78320 Le Mesnil Saint Denis (FR)
(72) Inventor: WAN, Xuanchen, Jingzhou, Hubei 434000 (CN); WANG, Wenfeng, Jingzhou, Hubei 434000 (CN)
(74) Representative: Valeo Powertrain Systems
(86) International application number: PCT/CN2023/142558
(87) International publication number: WO 2024/149072

(57) **Abstract**

A valve system (100) and a thermal management system. The valve system (100) comprises an expansion valve (101), a valve module (102), a first port (V1), a second port (V2), a third port (V3), a fourth port (V4), and a fifth port (V5). A first flow path (L1) is provided between the first port (V1) and the second port (V2). The expansion valve (101) is arranged on the first flow path (L1). The valve module (102) is communicated with the third port (V3), the fourth port (V4) and the fifth port (V5), respectively, and is also communicated with the first port (V1). The valve system has a simple structure and connection mode, so that the thermal management system comprising the valve system can achieve efficient thermal management in a quick charge mode of a vehicle, and thus has improved refrigeration performance.

## Description

### Technical Field

The present disclosure relates to a valve system and a thermal management system containing this valve system.

### Background Art

As environmental protection is taken ever more seriously, the use of electric vehicles is becoming more and more widespread. Electric vehicles store electrical energy for endurance and driving, so users can perform operations such as charging directly at home. To ensure vehicle safety and a comfortable traveling experience, thermal management of the traction battery and cabin of the automobile is necessary when the temperature is high or low, to help keep the traction battery and cabin at a suitable temperature. For example, the battery cannot be allowed to remain in a low-temperature state for a long period of time, resulting in pointless loss of charge, and the battery cannot be allowed to remain in a high-temperature state for a long period of time, so as to avoid an explosion that would endanger personal safety.

In order to increase the speed and convenience of charging an electric vehicle, improving the user experience for drivers and passengers, existing electric vehicles must have a fast charging capability, which requires increasing the charging power to achieve the object of a reduced charging time. However, a fast charging mode poses a new challenge for thermal management of the traction battery, because a large amount of heat is generated during the charging process of the traction battery, causing the temperature of the battery to rise. The faster the charging speed, the greater the rise in temperature and heat generation power of the battery. An excessively high temperature not only increases the internal resistance of the battery, but also accelerates aging of the battery, reducing the battery service life. When serious, an excessively high temperature further results in battery thermal runaway and thermal diffusion, which is life-threatening to the safety of passengers in the vehicle. Therefore, it is necessary to use suitable technology to guide away heat generated by a battery during an ultrafast charging process, limiting the rise in temperature of the battery.

### Summary of the Invention

Therefore, an object of the present disclosure is to provide a valve system and a thermal management system containing the valve system, the valve system having a simple structure and connection means, such that the thermal management system containing the valve system may realize efficient thermal management in a vehicle fast charging mode, with improved cooling performance.

The present disclosure relates to a valve system, the valve system comprising an expansion valve, a valve module, a first port, a second port, a third port, a fourth port and a fifth port, wherein a first flow path is provided between the first port and the second port; the expansion valve is arranged on the first flow path; the valve module is respectively connected to the third port, the fourth port and the fifth port, and is further connected to the first port.

In an embodiment, a first junction point is provided on the first flow path; the valve module is connected to the first junction point, and is connected to the first port by means of the first junction point.

In an embodiment, the first junction point is located between the expansion valve and the first port.

In an embodiment, a second flow path is further provided between the first port and the second port; the second flow path is connected in parallel to the first flow path, and, with the first flow path, is respectively connected to two sides of the expansion valve; the valve module is arranged on the second flow path.

In an embodiment, a first junction point and a second junction point are provided on the first flow path, and the first junction point and the second junction point are respectively located at two sides of the expansion valve;

The second flow path and the first flow path are respectively connected to the first junction point and the second junction point.

In an embodiment, the second junction point coincides with the second port.

In an embodiment, the valve module is a multi-way valve.

In an embodiment, the valve module comprises a first stop valve, a second stop valve, a third junction point, a fourth junction point and a one-way valve, wherein the first stop valve is arranged between the first port and the third junction point; the third junction point is connected to the fifth port; the second stop valve is arranged between the fourth port and the fourth junction point; the fourth junction point is connected to the third port; and the one-way valve is arranged between the third junction point and the fourth junction point, and allows fluid to flow in one direction from the fourth junction point toward the third junction point.

In an embodiment, the valve module comprises a first three-way valve, an intermediate junction point and a second three-way valve; three ports of the first three-way valve are respectively connected to the first port, the second port and the intermediate junction point; the intermediate junction point is connected to the fifth port; three ports of the second three-way valve are respectively connected to the intermediate junction point, the third port and the fourth port.

The present disclosure further relates to a thermal management system, comprising a first heat exchanger, a second heat exchanger and an intermediate heat exchanger, and the thermal management system further comprising the valve system as described above, wherein the first port of the valve system is connected to an outlet of the first heat exchanger; the second port of the valve system is connected to an inlet of the second heat exchanger; the third port of the valve system is connected to an outlet of the second heat exchanger; the fourth port of the valve system is connected to an inlet of a low-pressure side of the intermediate heat exchanger; and the fifth port of the valve system is connected to an inlet of a high-pressure side of the intermediate heat exchanger.

The advantages of the valve system and the thermal management system of the present disclosure lie in that the thermal management system is able to realize a large number of modes using simple pipeline connections, and modes can be switched conveniently and freely; and by using the valve system, a first heat exchanger, a second heat exchanger and an intermediate heat exchanger are connected in a refrigerant circuit, and the thermal management system may realize efficient thermal management in a vehicle fast charging mode, with improved cooling performance.

### Brief Description of the Drawings

In order to explain the technical solution in embodiments of the present disclosure more clearly, the drawings accompanying embodiments of the present disclosure are briefly described below. The drawings are merely used to illustrate some embodiments of the present disclosure, without limiting all embodiments of the present disclosure to this. In the drawings:
Fig. 1 shows a schematic diagram of a valve system of a thermal management system for a vehicle according to an embodiment of the present disclosure;
Fig. 2 shows a schematic diagram of a valve system of a thermal management system for a vehicle according to another embodiment of the present disclosure;
Fig. 3 shows a schematic diagram of a valve system of a thermal management system for a vehicle according to another embodiment of the present disclosure;
Fig. 4 shows a schematic diagram of a thermal management system for a vehicle according to an embodiment of the present disclosure;
Fig. 5 shows a schematic diagram of an AC mode of a thermal management system for a vehicle according to an embodiment of the present disclosure;
Fig. 6 shows a schematic diagram of an AC dehumidification mode of a thermal management system for a vehicle according to an embodiment of the present disclosure;
Fig. 7 shows a schematic diagram of an AC-heat exchanger mode of a thermal management system for a vehicle according to an embodiment of the present disclosure;
Fig. 8 shows a schematic diagram of a heat exchanger mode of a thermal management system for a vehicle according to an embodiment of the present disclosure;
Fig. 9 shows a schematic diagram of a heat pump dehumidification mode of a thermal management system for a vehicle according to an embodiment of the present disclosure;
Fig. 10 shows a schematic diagram of an air source heat pump mode of a thermal management system for a vehicle according to an embodiment of the present disclosure;
Fig. 11 shows a schematic diagram of a water source heat pump mode of a thermal management system for a vehicle according to an embodiment of the present disclosure;
Fig. 12 shows a schematic diagram of an electric motor waste heat recovery/electric motor self-heating mode of a thermal management system for a vehicle according to an embodiment of the present disclosure;
Fig. 13 shows a schematic diagram of a waste heat recovery mode of a thermal management system for a vehicle according to an embodiment of the present disclosure;
Fig. 14 shows a schematic diagram of an HVWH battery heating mode of a thermal management system for a vehicle according to an embodiment of the present disclosure;
Fig. 15 shows a schematic diagram of a series connection mode of a thermal management system for a vehicle according to an embodiment of the present disclosure;
Fig. 16 shows a schematic diagram of a thermal management system for a vehicle according to another embodiment of the present disclosure;
Fig. 17 shows a schematic diagram of an AC mode/AC dehumidification mode of a thermal management system for a vehicle according to another embodiment of the present disclosure;
Fig. 18 shows a schematic diagram of an AC-heat exchanger mode of a thermal management system for a vehicle according to another embodiment of the present disclosure;
Fig. 19 shows a schematic diagram of a heat exchanger mode of a thermal management system for a vehicle according to another embodiment of the present disclosure;
Fig. 20 shows a schematic diagram of an ultrafast charging mode of a thermal management system for a vehicle according to another embodiment of the present disclosure;
Fig. 21 shows a schematic diagram of a water source heat pump/electric motor heat recovery mode of a thermal management system for a vehicle according to another embodiment of the present disclosure;
Fig. 22 shows a schematic diagram of a water source heat pump dehumidification/electric motor heat recovery mode of a thermal management system for a vehicle according to another embodiment of the present disclosure;
Fig. 23 shows a schematic diagram of an air source heat pump mode of a thermal management system for a vehicle according to another embodiment of the present disclosure;
Fig. 24 shows a schematic diagram of an air source heat pump electric motor waste heat recovery/electric motor self-heating mode of a thermal management system for a vehicle according to another embodiment of the present disclosure;
Fig. 25 shows a schematic diagram of an air source heat pump electric motor/battery waste heat recovery mode of a thermal management system for a vehicle according to another embodiment of the present disclosure;
Fig. 26 shows a schematic diagram of a water source heat pump electric motor/battery waste heat recovery mode of a thermal management system for a vehicle according to another embodiment of the present disclosure;
Fig. 27 shows a schematic diagram of an HVWH electric motor heating/electric motor waste heat cabin heating mode of a thermal management system for a vehicle according to another embodiment of the present disclosure;
Fig. 28 shows a schematic diagram of an HVWH battery heating mode of a thermal management system for a vehicle according to another embodiment of the present disclosure; and
Fig. 29 shows a modification of the thermal management system according to Fig. 16.

### Detailed Description of Embodiments

In order to clarify the technical solution objective, the technical solution and advantages of the present disclosure, the technical solution of embodiments of the present disclosure is described clearly and completely below in conjunction with the drawings accompanying particular embodiments of the present disclosure. In the drawings, identical reference numerals denote identical components. It must be explained that the embodiments described are some, not all, of the embodiments of the present disclosure. All other embodiments obtained by those skilled in the art based on the described embodiments of the present disclosure without the need for inventive effort shall fall within the scope of protection of the present disclosure.

Unless otherwise defined, the technical or scientific terms used herein shall have the common meanings understood by those skilled in the art. The words "first", "second", and the like used in the description and claims of the patent application disclosed herein do not indicate any order, quantity or importance, being merely used to distinguish different component parts. Likewise, words such as "a" or "one" do not necessarily represent a quantity limit. Words such as "comprising", "including" or "having" mean that the element or object preceding the word covers the elements or objects listed after the word and equivalents thereof, without excluding other elements or objects. Words such as "connection" or "communication", rather than being limited to the physical or mechanical connection or communication shown in a drawing, may include connection or communication equivalent thereto, irrespective of whether it is direct or indirect. The terms "upper", "lower", "left", "right" and the like are only used to indicate a relative positional relationship, and when the absolute position of a described object changes, the relative positional relationship may also change accordingly.

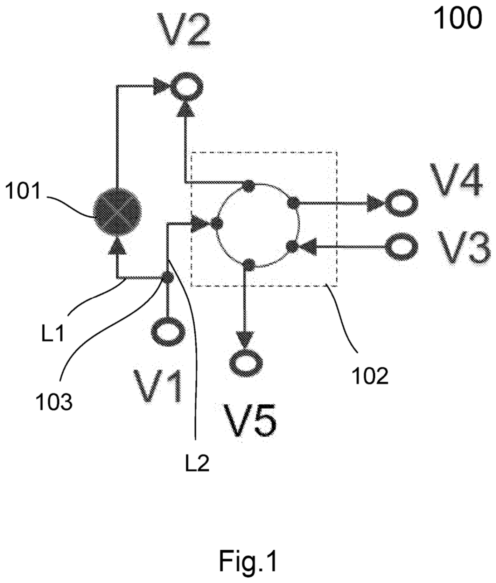

Various embodiments of a thermal management system and a valve system thereof for a vehicle according to embodiments of the present disclosure are described in detail below with reference to Figs. 1 to 29. The valve system and the thermal management system according to the present disclosure may be used for a new energy vehicle, such as an electric vehicle, a hybrid vehicle, etc.

As shown in Figs. 1 to 3, the valve system of the thermal management system for a vehicle according to the present disclosure may have different embodiments, and the valve system may be connected between various components of the thermal management system. As shown in Figs. 1 to 3, the valve system 100 comprises an expansion valve 101, a valve module 102, a first port V1, a second port V2, a third port V3, a fourth port V4 and a fifth port V5. The port may be an actual element port, or may also be a certain position on a connecting pipeline. A first flow path L1 is provided between the first port V1 and the second port V2; the expansion valve 101 is arranged on the first flow path L1. The valve module 102 is respectively connected to the third port V3, the fourth port V4 and the fifth port V5, and is further connected to the first port V1.

In addition, as shown in Figs. 1 to 3, a first junction point 103 is provided on the first flow path L1, and the valve module 102 is connected to the first junction point 103, and is connected to the first port V1 by means of the first junction point 103. The junction points herein may be actual connection points of different pipelines. For example, the first junction point 103 may be located between the expansion valve 101 and the first port V1.

As shown in Figs. 1 to 3, a second flow path L2 is further provided between the first port V1 and the second port V2. The second flow path L2 is connected in parallel to the first flow path L1, and, with the first flow path L1, is respectively connected to two sides of the expansion valve 101. The valve module 102 is arranged on the second flow path L2.

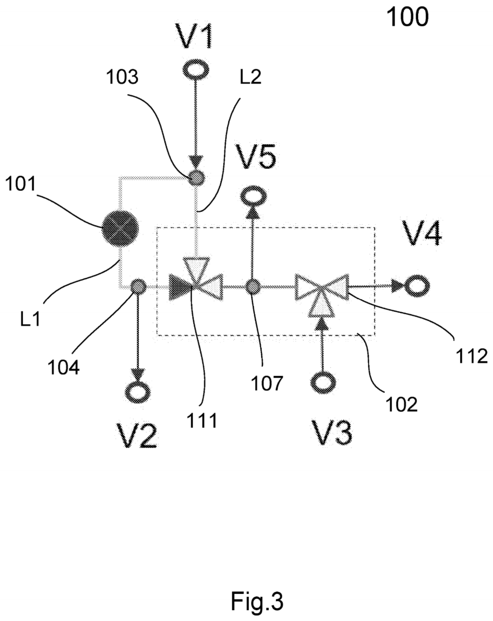

In addition, in some embodiments, a first junction point 103 and a second junction point 104 are provided on the first flow path L1, and the first junction point 103 and the second junction point 104 are respectively located at two sides of the expansion valve 101. The second flow path L2 and the first flow path L1 are respectively connected to the first junction point 103 and the second junction point 104. Fig. 3 clearly shows an example of such an embodiment; of course, other modifications are also possible. As shown in Fig. 1, preferably, the second junction point 104 may coincide with the second port V2.

Referring to Figs. 1 to 3, it can be seen that the valve module 102 may have various embodiments, such as being realized by means of a combination of different valve elements, but the present disclosure is not limited to these embodiments shown in the figures.

As shown in Fig. 1, the valve module 102 may be a multi-way valve. Specifically, the valve module 102 may be a five-way valve. Five ports of the five-way valve in Fig. 1 are respectively connected to the five ports V1 to V5 of the valve system; circulation inside the five-way valve will be explained with reference to the figures below. In addition, the expansion valve 101 in Fig. 1 may be an expansion valve with throttling and closed functions, such as a needle valve.

When the valve system described above is connected to a thermal management system, the valve system may have various working modes, such as four working modes, i.e. a first to fourth working mode. In the first working mode, the first port V1 and the second port V2 of the valve system are connected to each other, the third port V3 and the fifth port V5 are connected to each other, the fourth port V4 is closed, and the expansion valve 101 is open. In the second working mode, the first port V1 and the second port V2 of the valve system are connected to each other, the third port V3 and the fifth port V5 are connected to each other, the fourth port V4 is closed, and the expansion valve 101 is closed. In the third working mode, the first port V1 and the fifth port V5 of the valve system are connected to each other, the third port V3 and the fourth port V4 are connected to each other, the second port V2 is closed, and the expansion valve 101 is open. In the fourth working mode, the first port V1 and the fifth port V5 of the valve system are connected to each other, the third port V3 and the fourth port V4 are connected to each other, the second port V2 is closed, and the expansion valve 101 is closed. By providing different working modes, various thermal management modes of a thermal management system can be simply and conveniently realized.

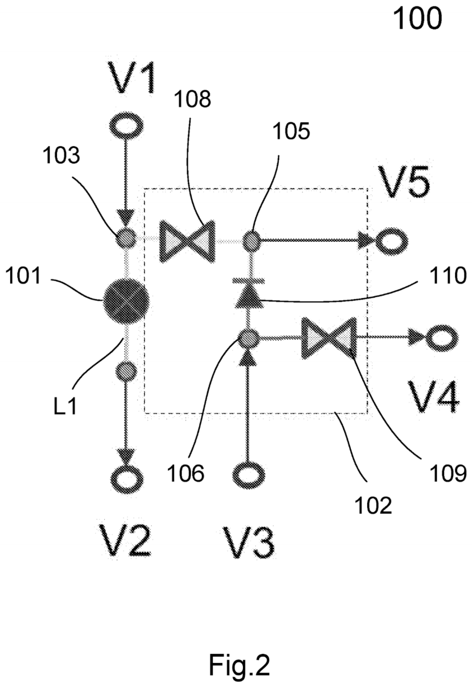

As shown in Fig. 2, the valve module 102 may comprise a first stop valve 108, a second stop valve 109, a third junction point 105, a fourth junction point 106 and a one-way valve 110. The first stop valve 108 is arranged between the first port V1 and the third junction point 105. The third junction point 105 is connected to the fifth port V5. The second stop valve 109 is arranged between the fourth port V4 and the fourth junction point 106. The fourth junction point 106 is connected to the third port V3. The one-way valve 110 is arranged between the third junction point 105 and the fourth junction point 106, and allows fluid to flow in one direction from the fourth junction point 106 toward the third junction point 105. That is, the one-way valve 110 allows fluid to flow from the third port V3 toward the fifth port V5 or the first port V1, but does not allow fluid to flow from the first port V1 or the fifth port V5 toward the third port V3. For example, fluid from the first port V1 may divide into two paths at the first junction point 103, wherein one of the two paths flows along the first flow path L1 through the expansion valve 101 and to the second port V2, and the other path flows to the valve module 102, and then flows toward the fifth port V5. The expansion valve 101 in Fig. 2 may be a ball valve, with fully open, throttling and closed functions, wherein the "fully open function" refers to fluid being able to flow through the expansion valve 101 in an unthrottled state.

As shown in Fig. 3, the valve module 102 comprises a first three-way valve 111, an intermediate junction point 107 and a second three-way valve 112. Three ports of the first three-way valve 111 are respectively connected to the first port V1, the second port V2 and the intermediate junction point 107. The intermediate junction point 107 is connected to the fifth port V5. Three ports of the second three-way valve 112 are respectively connected to the intermediate junction point 107, the third port V3 and the fourth port V4. For example, fluid from the first port V1 may divide into two paths at the first junction point 103, wherein one of the two paths flows along the first flow path L1 through the expansion valve 101 and to the second port V2, and the other path flows along the second flow path L2 to the valve module 102, and then flows toward the third port V3, the fourth port V4 and the fifth port V5. The expansion valve 101 in Fig. 3 may be an expansion valve with throttling and closed functions, such as a needle valve.

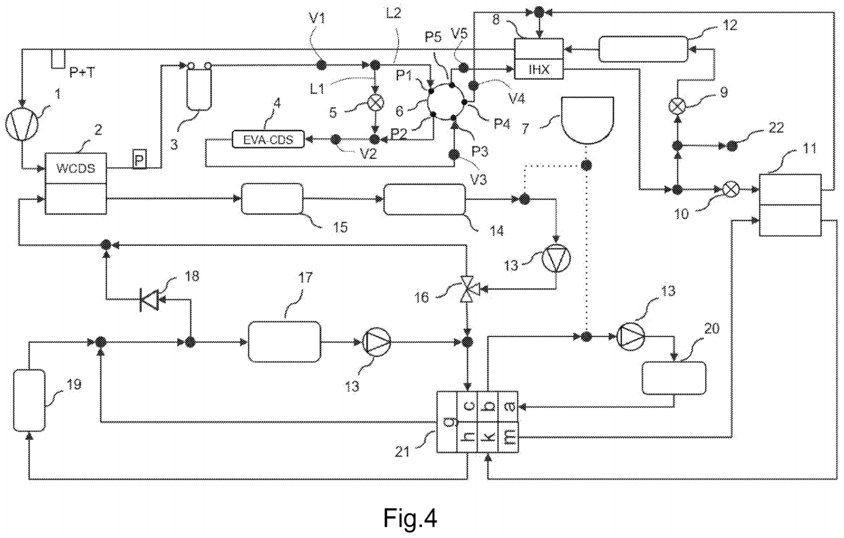

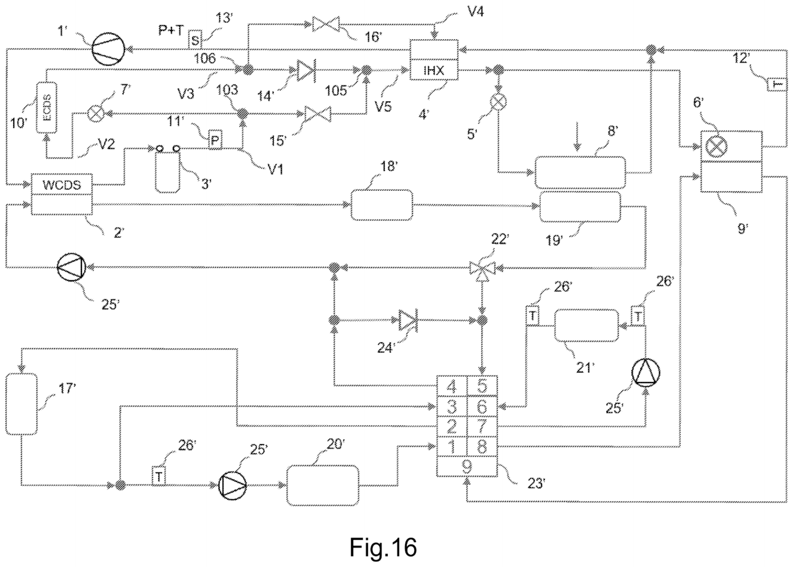

The valve system of Figs. 1 to 3 described above may be used in a thermal management system; besides the valve system, the thermal management system may further comprise at least three heat exchangers, such as a first heat exchanger 2, a second heat exchanger 4 and an intermediate heat exchanger 8 as shown in Fig. 4, or a first heat exchanger 2', a second heat exchanger 10' and an intermediate heat exchanger 4' as shown in Fig. 16. As shown in Fig. 4, the first port V1 of the valve system is connected to an outlet of the first heat exchanger 2; the second port V2 of the valve system is connected to an inlet of the second heat exchanger 4; the third port V3 of the valve system is connected to an outlet of the second heat exchanger 4; the fourth port V4 of the valve system is connected to an inlet of a low-pressure side of the intermediate heat exchanger 8; and the fifth port V5 of the valve system is connected in an inlet of a high-pressure side of the intermediate heat exchanger 8. As shown in Fig. 16, the first port V1 of the valve system is connected to an outlet of the first heat exchanger 2'; the second port V2 of the valve system is connected to an inlet of the second heat exchanger 10'; the third port V3 of the valve system is connected to an outlet of the second heat exchanger 10'; the fourth port V4 of the valve system is connected to an inlet of a low-pressure side of the intermediate heat exchanger 4'; and the fifth port V5 of the valve system is connected in an inlet of a high-pressure side of the intermediate heat exchanger 4'. The first heat exchanger may be a water-cooled condenser, represented by WCDS. The second heat exchanger may be an evaporator-condenser, which not only may be used as an evaporator but also may be used as a condenser, represented by EVA-CDS or ECDS. It should be noted that the ports in Figs. 4 and 16 herein may not be actual ports and may be certain positions on a pipeline.

The valve system of the present disclosure may connect the first heat exchanger, the second heat exchanger and the intermediate heat exchanger in the thermal management system, enhancing the cooling performance of the thermal management system, and may realize efficient thermal management in a vehicle fast charging mode, and has a simple structure and connection means.

Various operating modes of the thermal management system according to an embodiment of the present disclosure are described below with reference to Figs. 4 - 15.

As shown in Fig. 4, the thermal management system comprises a refrigerant circuit located at an upper part and a cooling liquid circuit located at a lower part. The refrigerant is Freon for example, and the cooling liquid is a liquid mixture of water and ethanol for example.

The refrigerant circuit may have a compressor 1, which can compress the refrigerant to form high-temperature high-pressure refrigerant gas. The refrigerant circuit further has a first heat exchanger 2 that may be a water-cooled condenser, a second heat exchanger 4 that may be an evaporator-condenser, an intermediate heat exchanger (IHX) 8 and an evaporator 12; heat-exchange processing performed at the first heat exchanger 2 on the high-temperature high-pressure refrigerant gas output by the compressor can obtain a high-temperature refrigerant liquid, the second heat exchanger 4 may perform further heat exchange thereon, and the refrigerant liquid undergoes yet further heat exchange processing at the intermediate heat exchanger 8, and then enters the evaporator 12 for heat absorption through evaporation, and the refrigerant then flows back to the compressor 1 via the intermediate heat exchanger 8. A drying bottle 3, for filtering impurities in the refrigerant and drying the environment, may be provided on a line on an outlet side of the first heat exchanger 2 or downstream thereof. Various valves 9, 10, such as an expansion valve, are further provided on a line at an outlet of a high-pressure side (a lower part of the intermediate heat exchanger 8 in the figure) of the intermediate heat exchanger 8 or downstream thereof. For example, the valve 9 is arranged on a line of an inlet side of the evaporator 12, and the valve 10 is arranged on a line of an inlet side of the third heat exchanger 11 (e.g. a chiller). In addition, the refrigerant circuit further has a junction point 22, which is an expansion connection point and may be connected to another evaporator, thereby expanding the system into a dual-evaporation system. Furthermore, various sensors may be further provided on the refrigerant circuit in Fig. 4; they are represented by P+T and P, and are used for measuring a temperature or a pressure of refrigerant.

In addition, the refrigerant circuit further comprises a five-way valve 6 and an expansion valve 5, the two corresponding to the valve system shown in Fig. 1. The expansion valve 5 corresponds to the expansion valve 101 of Fig. 1, and has two states of open and closed. The five-way valve 6 has five ports marked P1, P2, P3, P4 and P5, the five ports being respectively connected in parallel to the first to fifth ports V1 to V5 of the valve system shown in Fig. 1, and a connected state between the five ports is identical to a connected state between the first to fifth ports V1 to V5 of the valve system. V1 to V5 used in Fig. 4 schematically show positions respectively corresponding to the first to fifth ports V1 to V5 of the valve system of Fig. 1. In addition, L1 and L2 further used in Fig. 4 schematically show a first flow path L1 and a second flow path L2. The five-way valve 6 may have two working states, i.e. a first working state and a second working state. In the first working state, the port P1 and the port P2 of the five-way valve 6 are connected to each other, the port P3 and the port P5 are connected to each other, and the port P4 is closed. In the second working state, the port P1 and the port P5 of the five-way valve 6 are connected to each other, the port P3 and the port P4 are connected to each other, and the port P2 is closed. By means of providing connections between different ports of the five-way valve 6, various connection means of a refrigerant circuit can be simply and conveniently realized.

The cooling liquid circuit may comprise a first heat exchanger 2; the first heat exchanger 2 is a water-cooled condenser of the refrigerant circuit, and further comprises a water heater 15, a warm air apparatus 14, multiple pumps 13, a three-way valve 16, an electric motor assembly 17 comprising an electric motor and a microcontroller unit MCU, etc., a cooling liquid one-way valve 18, a low-temperature radiator 19, a battery assembly 20 and a third heat exchanger 11 (e.g. a chiller). The water heater 15 is used to heat cooling liquid flowing therethrough. The water heater 15 and the warm air apparatus 14 may be used to heat the passenger cabin of the vehicle. When it is necessary to heat the passenger cabin, if the temperature of warm air blown out by the warm air apparatus 14 fails to reach the temperature set by the user, the water heater 15 can also be switched on to heat the cooling liquid, to increase the temperature of the cooling liquid flowing to the warm air apparatus 14, thus helping to increase the temperature of the warm air, and accelerating the rise in temperature of the passenger cabin. The cooling liquid circuit may further optionally comprise a liquid storage tank 7, which is connected upstream of the pump 13.

In addition, the cooling liquid circuit further comprises a seven-way valve 21, which has seven ports marked a, b, c, g, h, k and m. The seven-way valve 21 has four operating states, namely a first operating state, a second operating state, a third operating state and a fourth operating state. In the first operating state, port c and port h of the seven-way valve 21 are connected to each other, port b and port k of the seven-way valve 21 are connected to each other, port a and port m of the seven-way valve 21 are connected to each other, and port g of the seven-way valve 21 is closed. In the second operating state, port c and port b of the seven-way valve 21 are connected to each other, port h and port k of the seven-way valve 21 are connected to each other, port a and port m of the seven-way valve 21 are connected to each other, and port g of the seven-way valve 21 is closed. In the third operating state, port c and port b of the seven-way valve 21 are connected to each other, port g and port k of the seven-way valve 21 are connected to each other, port a and port m of the seven-way valve 21 are connected to each other, and port h of the seven-way valve 21 is closed. In the fourth operating state, port c and port m of the seven-way valve 21 are connected to each other, port h and port k of the seven-way valve 21 are connected to each other, port a and port b of the seven-way valve 21 are connected to each other, and port g of the seven-way valve 21 is closed. By means of providing connections between different ports of the seven-way valve 21, various connection means of a cooling liquid circuit can be simply and conveniently realized.

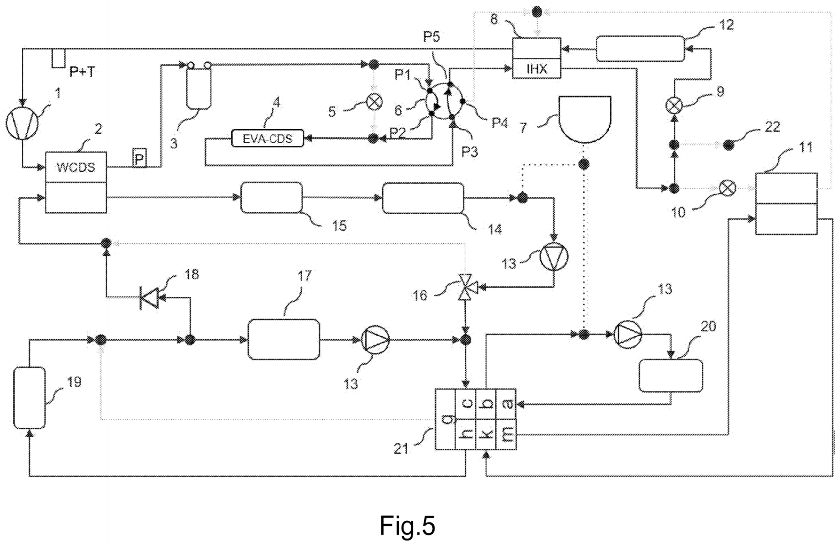

As shown in Fig. 5, the thermal management system is in an AC mode. In this mode, the seven-way valve 21 of the cooling liquid circuit is in the first operating state, the five-way valve 6 of the refrigerant circuit is in the first working state, and the expansion valve 5 is closed. Therefore, what is shown in Fig. 5 corresponds to the second working mode of the corresponding valve system. In this mode, the first heat exchanger 2 and the second heat exchanger 4 are connected in series in the refrigerant circuit, and the second heat exchanger 4 may serve as a condenser and may improve a refrigeration effect. In addition, the evaporator 12 is working, and the third heat exchanger 11 is not working.

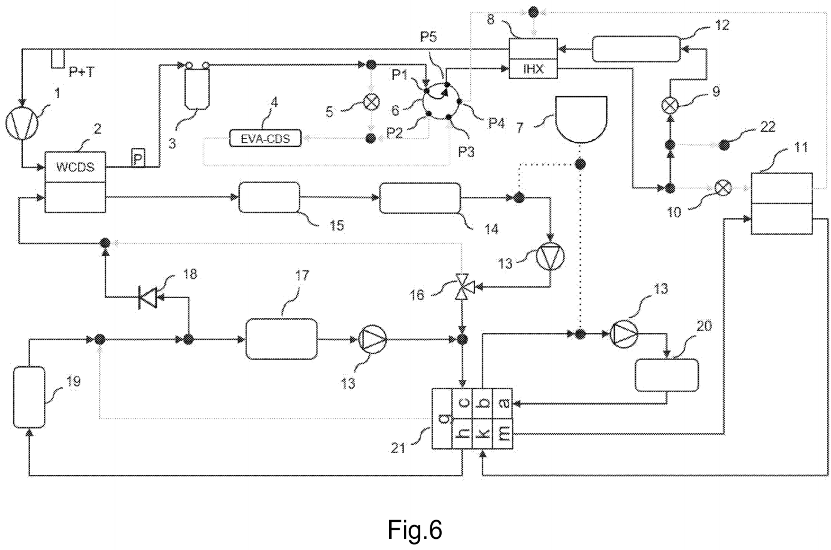

As shown in Fig. 6, the thermal management system is in an AC dehumidification mode. In this mode, the seven-way valve 21 of the cooling liquid circuit is in the first operating state, the five-way valve 6 of the refrigerant circuit is in the second working state, and the expansion valve 5 is closed. Therefore, what is shown in Fig. 6 corresponds to the fourth working mode of the corresponding valve system. In this mode, the flow path of the second heat exchanger 4 is disconnected; refrigerant flows through the first heat exchanger 2 but does not flow through the second heat exchanger 4, and therefore may be used for a dehumidification mode without high refrigeration requirements. In addition, the evaporator 12 is working.

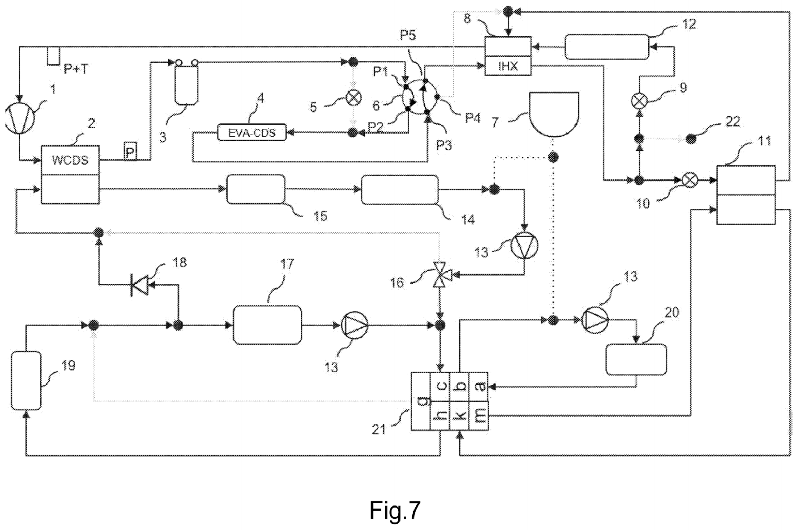

As shown in Fig. 7, the thermal management system is in an AC-heat exchanger mode. In this mode, the seven-way valve 21 of the cooling liquid circuit is in the first operating state, the five-way valve 6 of the refrigerant circuit is in the first working state, and the expansion valve 5 is closed. Therefore, what is shown in Fig. 7 corresponds to the second working mode of the corresponding valve system. In addition, the evaporator 12 is working, and the third heat exchanger 11 is also working, which may reduce the temperature of the battery assembly 20. In this mode, the first heat exchanger 2 and the second heat exchanger 4 are connected in series in the refrigerant circuit, and the second heat exchanger 4 may serve as a condenser and therefore may improve a refrigeration effect. Therefore, this mode also may be used for reducing the battery temperature during ultrafast charging of a vehicle.

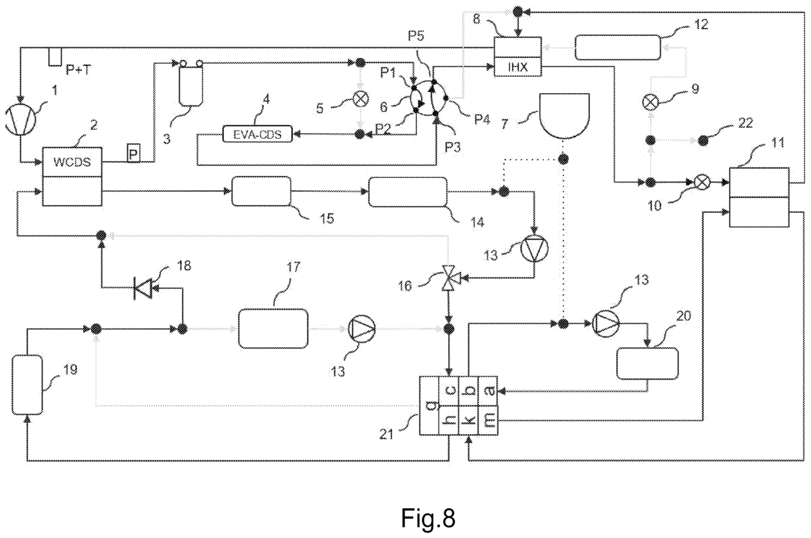

As shown in Fig. 8, the thermal management system is in a heat exchanger mode. In this mode, the seven-way valve 21 of the cooling liquid circuit is in the first operating state, the five-way valve 6 of the refrigerant circuit is in the first working state, and the expansion valve 5 is closed. Therefore, what is shown in Fig. 8 corresponds to the second working mode of the corresponding valve system. In addition, the third heat exchanger 11 is working, which may reduce the temperature of the battery assembly 20, but the evaporator 12 is not working.

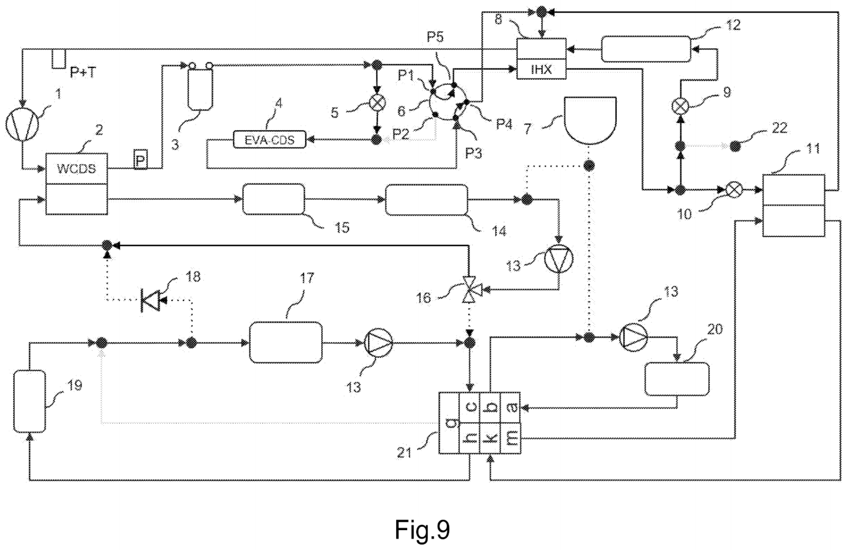

As shown in Fig. 9, the thermal management system is in a heat pump dehumidification mode. In this mode, the seven-way valve 21 of the cooling liquid circuit is in the first operating state, the five-way valve 6 of the refrigerant circuit is in the second working state, and the expansion valve 5 is open. Therefore, what is shown in Fig. 9 corresponds to the third working mode of the corresponding valve system. In addition, the evaporator 12 and the third heat exchanger 11 are working, and the warm air apparatus 14 is working, and the water heater 15 may be working.

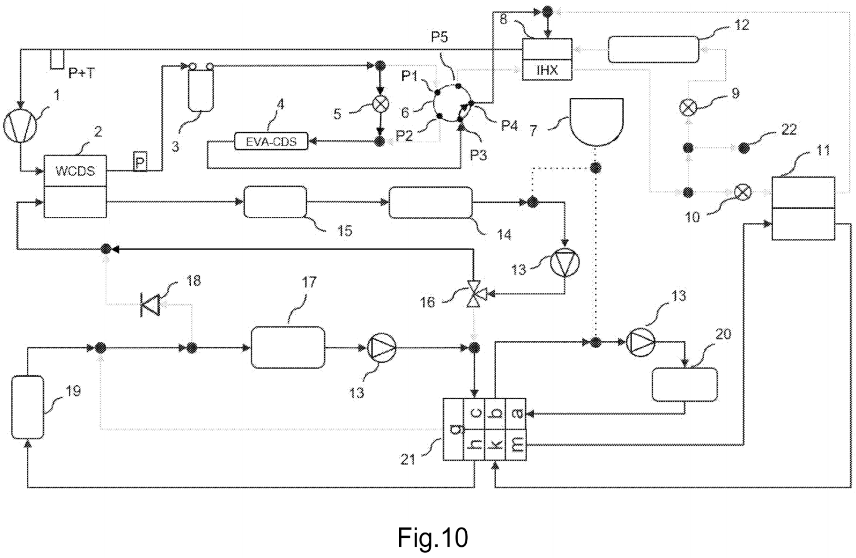

As shown in Fig. 10, the thermal management system is in an air source heat pump mode. In this mode, the seven-way valve 21 of the cooling liquid circuit is in the fourth operating state, the five-way valve 6 of the refrigerant circuit is in the second working state, and the expansion valve 5 is open. Therefore, what is shown in Fig. 10 corresponds to the third working mode of the corresponding valve system. In addition, the evaporator 12 is not working. The first heat exchanger 2 and the second heat exchanger 4 are used in a series connection, and the second heat exchanger 4 may serve as an evaporator and absorb heat from the outside.

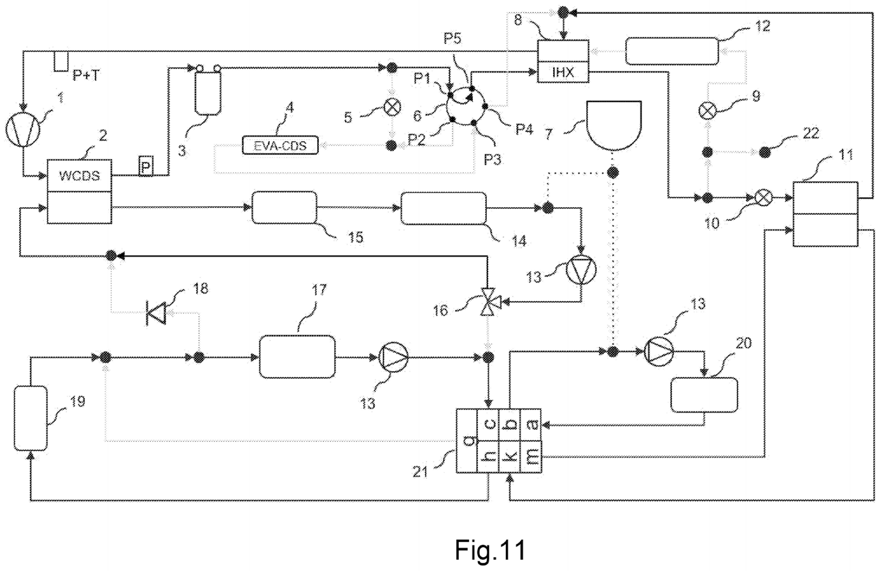

As shown in Fig. 11, the thermal management system is in a water source heat pump mode. In this mode, the seven-way valve 21 of the cooling liquid circuit is in the fourth operating state, the five-way valve 6 of the refrigerant circuit is in the second working state, and the expansion valve 5 is closed. Therefore, what is shown in Fig. 11 corresponds to the fourth working mode of the corresponding valve system. In addition, the third heat exchanger 11 is working, and the evaporator 12 is not working.

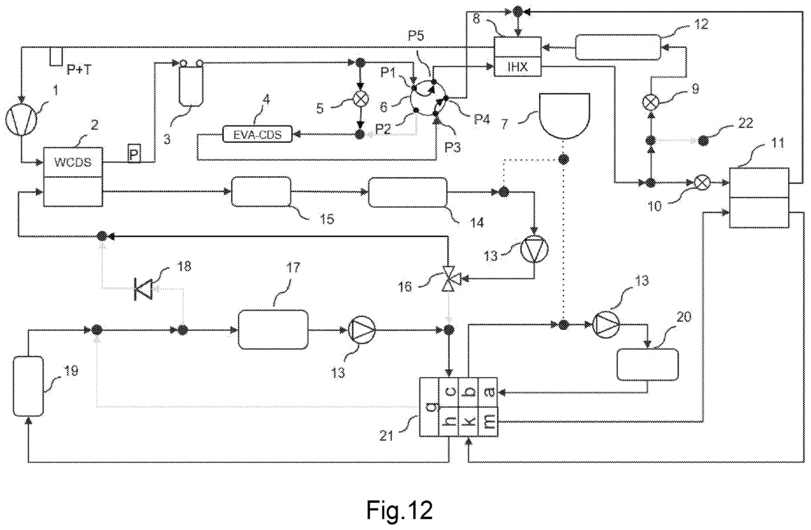

As shown in Fig. 12, the thermal management system is in an electric motor waste heat recovery/electric motor self-heating mode. In this mode, the seven-way valve 21 of the cooling liquid circuit is in the fourth operating state, the five-way valve 6 of the refrigerant circuit is in the second working state, and the expansion valve 5 is open. Therefore, what is shown in Fig. 12 corresponds to the third working mode of the corresponding valve system. In addition, the third heat exchanger 11 is working, and the evaporator 12 is working. Heat generated by the electric motor assembly 17 can be transferred to the refrigerant circuit at the third heat exchanger 11.

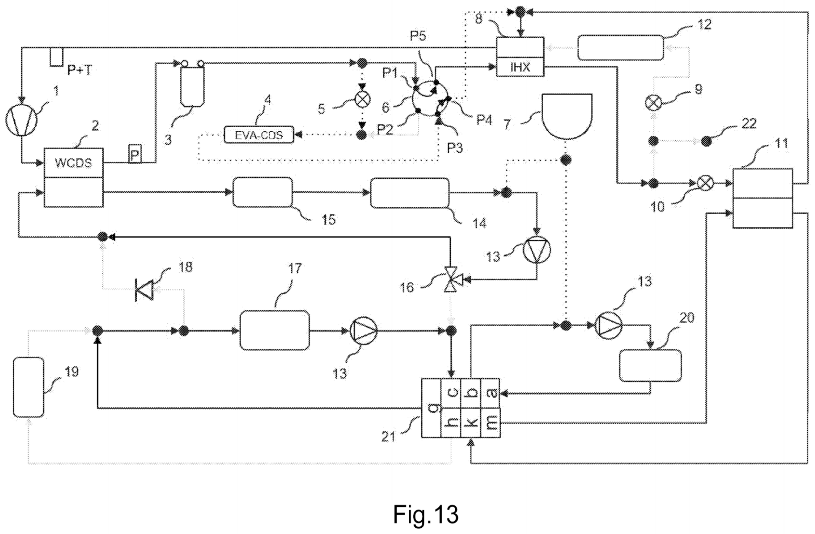

As shown in Fig. 13, the thermal management system is in a waste heat recovery mode. In this mode, the seven-way valve 21 of the cooling liquid circuit is in the third operating state, the five-way valve 6 of the refrigerant circuit is in the second working state, and the expansion valve 5 may be open or closed. Therefore, what is shown in Fig. 13 corresponds to the third working mode or the fourth working mode of the corresponding valve system. In addition, the third heat exchanger 11 is working, but the evaporator 12 is not working, and the low-temperature radiator 19 is bypassed. Heat generated by the electric motor assembly 17 and the battery assembly 20 can be transferred to the refrigerant circuit at the third heat exchanger 11.

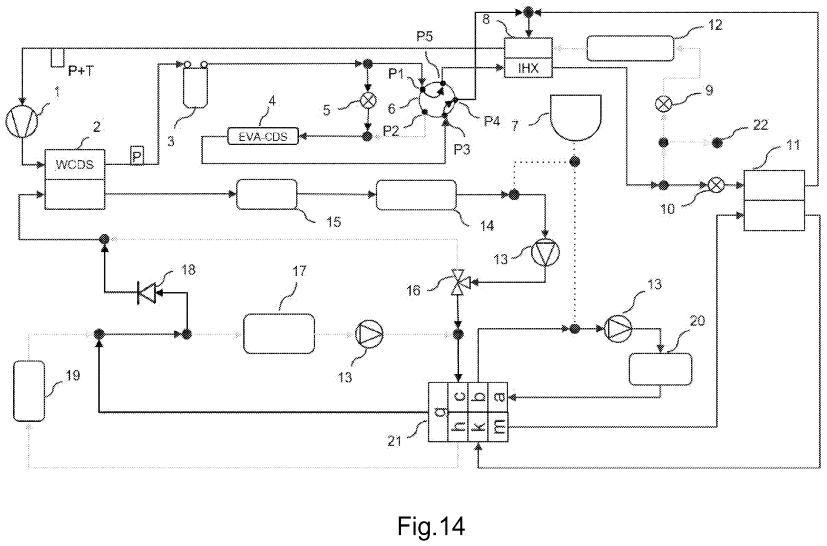

As shown in Fig. 14, the thermal management system is in an HVWH battery heating mode; HVWH is an abbreviation for high voltage water heater. In this mode, the seven-way valve 21 of the cooling liquid circuit is in the third operating state, the five-way valve 6 of the refrigerant circuit is in the second working state, and the expansion valve 5 is open. Therefore, what is shown in Fig. 14 corresponds to the third working mode of the corresponding valve system. In addition, the evaporator 12 is not working, the third heat exchanger 11 is working, the low-temperature radiator 19 is bypassed, and the water heater 15 is working to heat a battery.

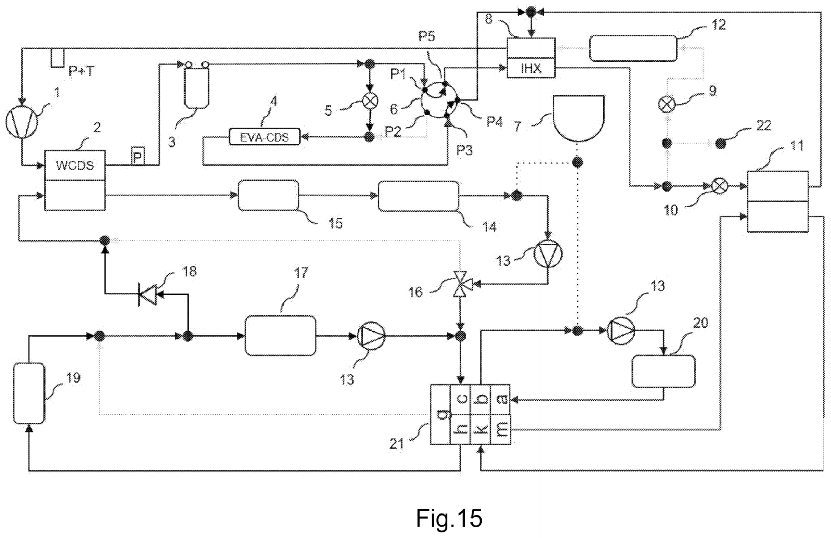

As shown in Fig. 15, the thermal management system is in a series connection mode. In this mode, the seven-way valve 21 of the cooling liquid circuit is in the second operating state, the five-way valve 6 of the refrigerant circuit is in the second working state, and the expansion valve 5 is open. Therefore, what is shown in Fig. 15 corresponds to the third working mode of the corresponding valve system. In addition, the evaporator 12 is not working, and the third heat exchanger 11 is working. The electric motor assembly 17, the battery assembly 20, the low-temperature radiator 19 and the third heat exchanger 11 are connected in series in the cooling liquid circuit. At the third heat exchanger 11, heat in the cooling liquid circuit may be transferred to the refrigerant circuit.

As described above, a thermal management system with the valve system shown in Fig. 1 has simple connections, may realize various heat management modes, and further may realize efficient thermal management in a vehicle fast charging mode, with improved cooling performance.

Various operating modes of the thermal management system according to another embodiment of the present disclosure are described below with reference to Figs. 16 - 28.

As shown in Fig. 16, the thermal management system likewise comprises a refrigerant circuit located at an upper part and a cooling liquid circuit located at a lower part.

The refrigerant circuit shown in Fig. 16 likewise may have a compressor 1', which can compress the refrigerant to form high-temperature high-pressure refrigerant gas. The refrigerant circuit may further have a first heat exchanger 2' that may act as a water-cooled condenser (WCDS), a second heat exchanger 10' that may act as an evaporator-condenser, an intermediate heat exchanger (IHX) 4' and an evaporator 8'. A drying bottle 3' may be provided on a line on an outlet side of the first heat exchanger 2' or downstream thereof. A valve 5', for example an expansion valve, may further be provided between an outlet of a high-pressure side of the intermediate heat exchanger 4' and the evaporator 8'. In addition, the refrigerant circuit is further provided with a valve 6', for example an expansion valve, which is arranged at a third heat exchanger 9' (e.g. a chiller). Furthermore, various sensors (S or P or T) 11', 12', 13' may be further provided on the refrigerant circuit in Fig. 16; they are represented by P+T, T and P, and are used for measuring a temperature or a pressure of refrigerant.

In addition, the refrigerant circuit further comprises the valve system shown in Fig. 2. Specifically, the refrigerant circuit further comprises an expansion valve 7', a first stop valve 15', a second stop valve 16' and a one-way valve 14'. In addition, Fig. 16 further schematically shows schematic positions of the first port V1 to the fifth port V5 of the valve system in the thermal management system, and schematic positions of the first junction point 103, the third junction point 105 and the fourth junction point 106 of the valve system. The first stop valve 15' is arranged between the first port V1 and the third junction point 105. The third junction point 105 is connected to the fifth port V5. The second stop valve 16' is arranged between the fourth port V4 and the fourth junction point 106. The fourth junction point 106 is connected to the third port V3. The one-way valve 14' is arranged between the third junction point 105 and the fourth junction point 106, and allows fluid to flow in one direction from the fourth junction point 106 toward the third junction point 105. It should be noted that the five ports V1 to V5 in the thermal management system shown in Fig. 16, in particular V1, V2 and V3, are not actual ports.

The cooling liquid circuit may comprise a first heat exchanger 2'; the first heat exchanger 2' is a water-cooled condenser of the refrigerant circuit, and further comprises a water heater 18', a warm air apparatus 19', multiple pumps 25', a three-way valve 22', an electric motor assembly 20' comprising an electric motor and a microcontroller unit MCU, etc., a cooling liquid one-way valve 24', a low-temperature radiator 17', a battery assembly 21' and a third heat exchanger 9' (e.g. a chiller). Furthermore, a sensor (T) 26' may be further provided on the cooling liquid circuit in Fig. 16, used for measuring a temperature of cooling liquid.

In addition, the cooling liquid circuit further comprises a nine-way valve 23', which has nine ports marked 1 to 9. The nine-way valve 23' has six operating states, namely a first operating state, a second operating state, a third operating state, a fourth operating state, a fifth operating state and a sixth operating state. In the first operating state, port 1 and port 4 of the nine-way valve 23' are connected to each other, port 6 and port 8 are connected to each other, port 9 and port 7 are connected to each other, port 5 and port 2 are connected to each other, and port 3 is closed. In the second operating state, port 1 and port 4 of the nine-way valve 23' are connected to each other, port 6 and port 8 are connected to each other, port 9 and port 2 are connected to each other, port 5 and port 7 are connected to each other, and port 3 is closed. In the third operating state, port 1 and port 4 of the nine-way valve 23' are connected to each other, port 6 and port 8 are connected to each other, port 5 and port 7 are connected to each other, port 9 and port 3 are connected to each other, and port 2 is closed. In the fourth operating state, port 1 and port 8 of the nine-way valve 23' are connected to each other, port 6 and port 4 are connected to each other, port 5 and port 7 are connected to each other, port 9 and port 2 are connected to each other, and port 3 is closed. In the fifth operating state, port 1 and port 8 of the nine-way valve 23' are connected to each other, port 6 and port 4 are connected to each other, port 5 and port 7 are connected to each other, port 9 and port 3 are connected to each other, and port 2 is closed. In the sixth operating state, port 1 and port 4 of the nine-way valve 23' are connected to each other, port 6 and port 8 are connected to each other, port 9 and port 7 are connected to each other, port 5 and port 3 are connected to each other, and port 2 is closed. By means of providing connections between different ports of the nine-way valve 23', various connection means of a cooling liquid circuit can be simply and conveniently realized.

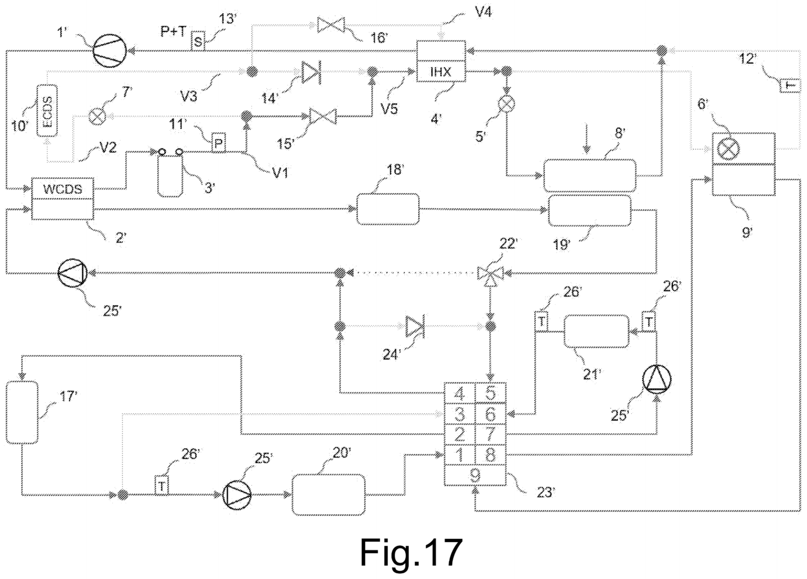

As shown in Fig. 17, the thermal management system is in an AC mode/AC dehumidification mode. In this mode, the nine-way valve 23' of the cooling liquid circuit is in the first operating state, the first stop valve 15' is open (the first port V1 and the fifth port V5 are connected to each other), the expansion valve 7' is closed (the second port V2 is closed), and the second stop valve 16' is closed. In addition, the evaporator 8' is working, and the third heat exchanger 9' is not working. Herein, closed pipelines are represented with a light color.

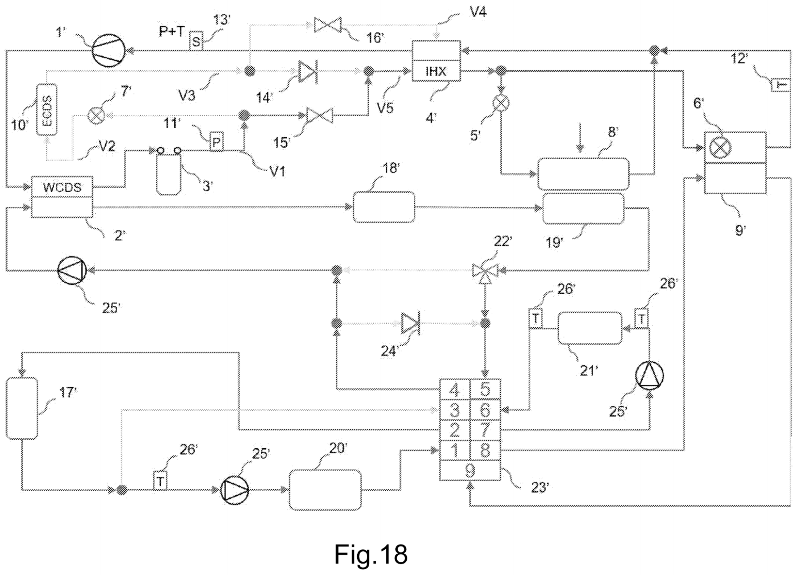

As shown in Fig. 18, the thermal management system is in an AC-heat exchanger mode. In this mode, the nine-way valve 23' of the cooling liquid circuit is in the first operating state, the first stop valve 15' is open (the first port V1 and the fifth port V5 are connected to each other), the expansion valve 7' is closed (the second port V2 is closed), and the second stop valve 16' is closed. In addition, the evaporator 8' is working, and the third heat exchanger 9' is also working, which may reduce the temperature of the battery assembly 21'.

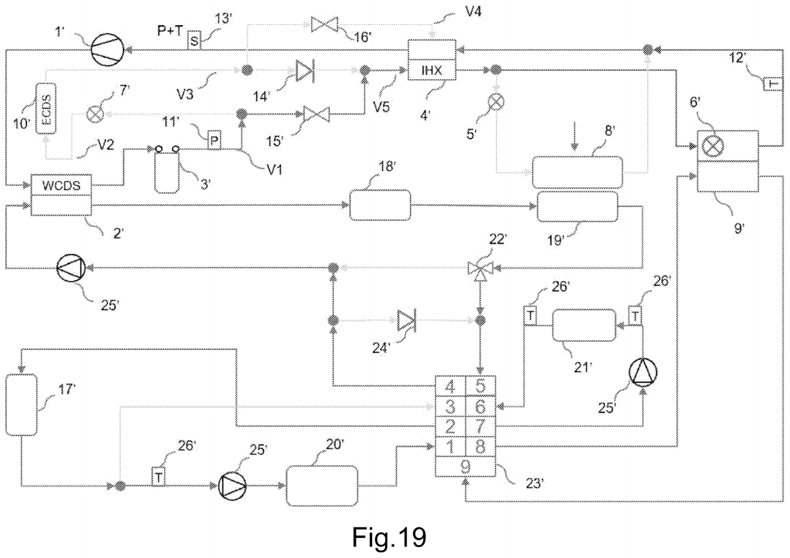

As shown in Fig. 19, the thermal management system is in a heat exchanger mode. In this mode, the nine-way valve 23' of the cooling liquid circuit is in the first operating state, the first stop valve 15' is open (the first port V1 and the fifth port V5 are connected to each other), the expansion valve 7' is closed (the second port V2 is closed), and the second stop valve 16' is closed (the fourth port V4 is closed). In addition, the third heat exchanger 9' is working, which may reduce the temperature of the battery assembly 21', but the evaporator 8' is not working.

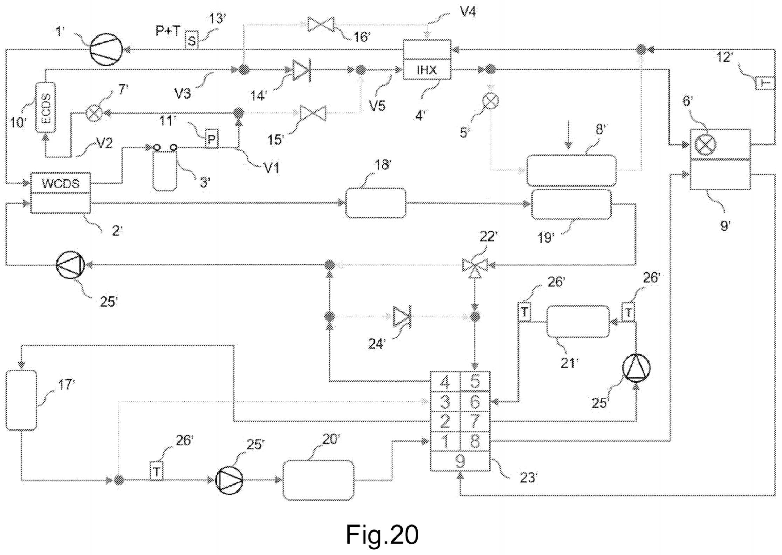

As shown in Fig. 20, the thermal management system is in an ultrafast charging mode. In this mode, the nine-way valve 23' of the cooling liquid circuit is in the first operating state, the first stop valve 15' is closed, the expansion valve 7' is open (refrigerant may pass through the expansion valve 7' unthrottled, and the first port V1 and the second port V2 are connected to each other), the second stop valve 16' is closed (the fourth port V4 is closed), and the one-way valve 14' is open (the third port V3 and the fifth port V5 are connected to each other). In addition, the third heat exchanger 9' is working, which may reduce the temperature of the battery assembly 21', but the evaporator 8' is not working. The first heat exchanger 2' and the second heat exchanger 10' are connected in series in the refrigerant circuit, and the second heat exchanger 10' may serve as a condenser and may improve a refrigeration effect. By means of using two condensers, the temperature of a battery may be efficiently reduced.

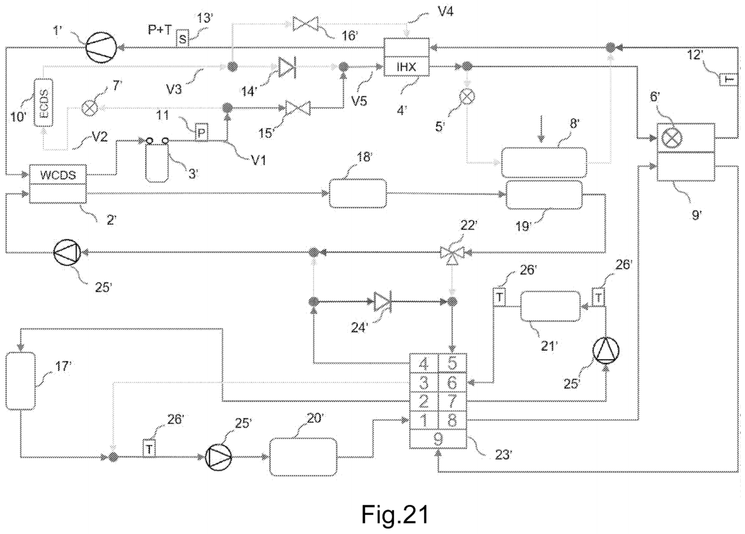

As shown in Fig. 21, the thermal management system is in a water source heat pump/electric motor heat recovery mode. In this mode, the nine-way valve 23' of the cooling liquid circuit is in the fourth operating state, the first stop valve 15' is open (the first port V1 and the fifth port V5 are connected to each other), the expansion valve 7' is closed (the second port V2 is closed), the second stop valve 16' is closed, and the one-way valve 14' is closed. In addition, the evaporator 8' is not working, and the third heat exchanger 9' is working. The electric motor assembly 20' is connected in series to the third heat exchanger 9', and heat of the cooling liquid may be transferred to the refrigerant circuit at the third heat exchanger 9'.

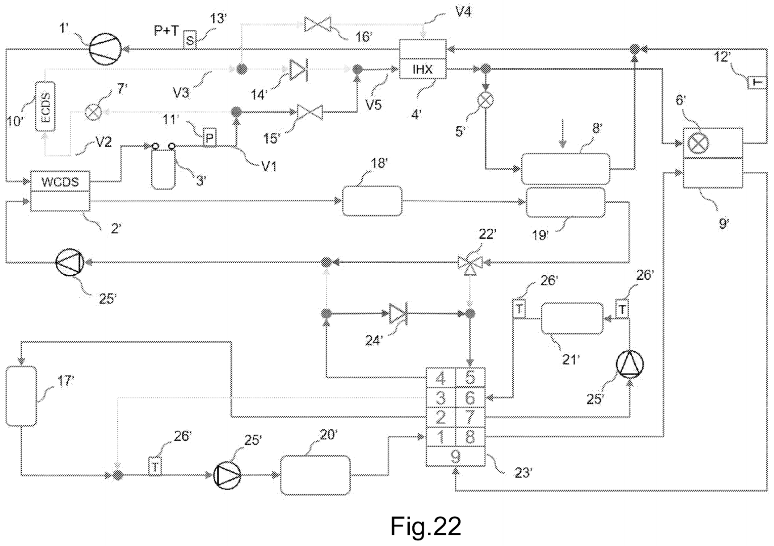

As shown in Fig. 22, the thermal management system is in a water source heat pump dehumidification/electric motor heat recovery mode. In this mode, the nine-way valve 23' of the cooling liquid circuit is in the fourth operating state, the first stop valve 15' is open (the first port V1 and the fifth port V5 are connected to each other), the expansion valve 7' is closed (the second port V2 is closed), the second stop valve 16' is closed, and the one-way valve 14' is closed. In addition, the evaporator 8' and the third heat exchanger 9' are working. The electric motor assembly 20' is connected in series to the third heat exchanger 9', and heat of the cooling liquid may be transferred to the refrigerant circuit at the third heat exchanger 9'.

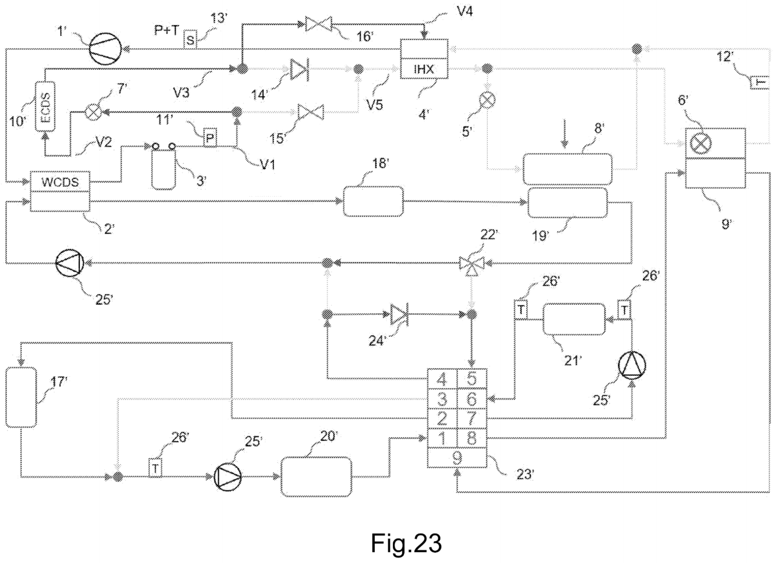

As shown in Fig. 23, the thermal management system is in an air source heat pump mode. In this mode, the nine-way valve 23' of the cooling liquid circuit is in the fourth operating state, the first stop valve 15' is closed, the expansion valve 7' is open (the first port V1 and the second port V2 are connected to each other), the second stop valve 16' is open (the third port V3 and the fourth port V4 are connected to each other), and the one-way valve 14' is closed (the third port V3 and the fifth port V5 are not connected to each other). In addition, the third heat exchanger 9' is working, and the evaporator 8' is not working. The first heat exchanger 2' and the second heat exchanger 10' are connected in series in the refrigerant circuit, and the second heat exchanger 10' may serve as an evaporator.

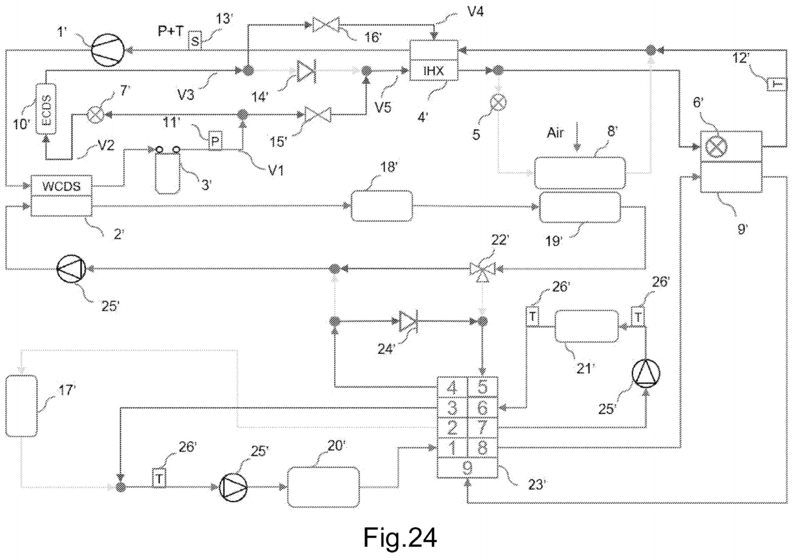

As shown in Fig. 24, the thermal management system is in an air source heat pump electric motor heat recovery/electric motor self-heating mode. In this mode, the nine-way valve 23' of the cooling liquid circuit is in the fifth operating state, the first stop valve 15' is open (the first port V1 and the fifth port V5 are connected to each other), the expansion valve 7' is open (the first port V1 and the second port V2 are connected to each other), the second stop valve 16' is open (the third port V3 and the fourth port V4 are connected to each other), and the one-way valve 14' is closed (the third port V3 and the fifth port V5 are not connected to each other). In addition, the third heat exchanger 9' is working, but the evaporator 8' is not working, and the low-temperature radiator 17' is bypassed. The electric motor assembly 20' is connected in series to the third heat exchanger 9', and heat in the cooling liquid may be transferred to the refrigerant circuit at the third heat exchanger 9'.

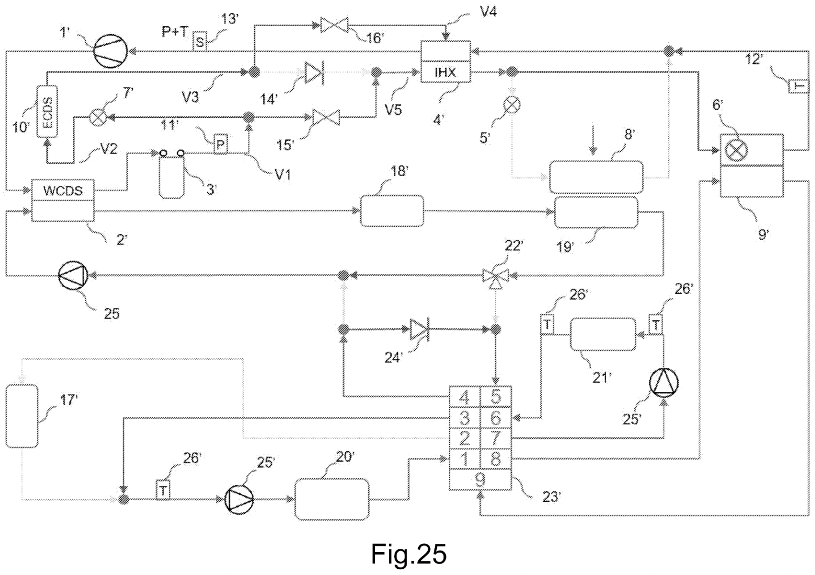

As shown in Fig. 25, the thermal management system is in an air source heat pump electric motor/battery waste heat recovery mode. In this mode, the nine-way valve 23' of the cooling liquid circuit is in the third operating state, the first stop valve 15' is open (the first port V1 and the fifth port V5 are connected to each other), the expansion valve 7' is open (the first port V1 and the second port V2 are connected to each other), the second stop valve 16' is open (the third port V3 and the fourth port V4 are connected to each other), and the one-way valve 14' is closed (the third port V3 and the fifth port V5 are not connected to each other). In addition, the third heat exchanger 9' is working, but the evaporator 8' is not working, and the low-temperature radiator 17' is bypassed. The electric motor assembly 20', the battery assembly 21' and the third heat exchanger 9' are connected to each other in series, and heat of the cooling liquid may be transferred to the refrigerant circuit at the third heat exchanger 9'.

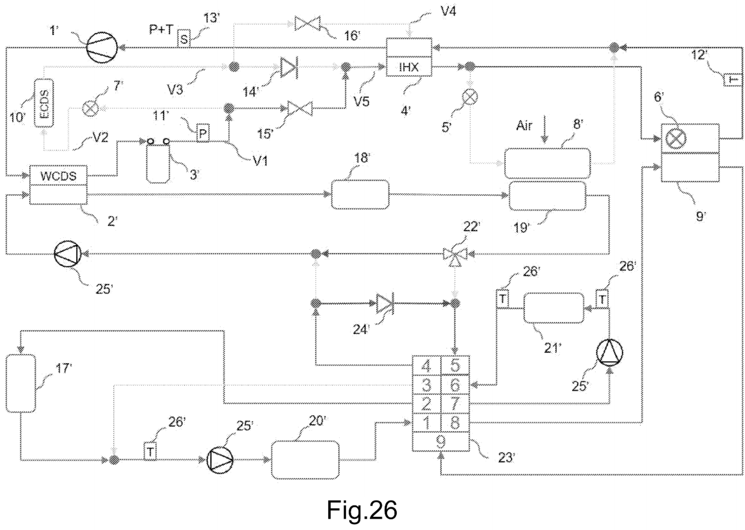

As shown in Fig. 26, the thermal management system is in a water source heat pump electric motor/battery waste heat recovery mode. In this mode, the nine-way valve 23' of the cooling liquid circuit is in the second operating state, the first stop valve 15' is open (the first port V1 and the fifth port V5 are connected to each other), the expansion valve 7' is closed (the second port V2 is closed), the second stop valve 16' is closed, and the one-way valve 14' is closed. In addition, the third heat exchanger 9' is working, and the evaporator 8' is not working. The electric motor assembly 20', the battery assembly 21', the low-temperature radiator 17' and the third heat exchanger 9' are connected to each other in series, and heat in the cooling liquid may be transferred to the refrigerant circuit at the third heat exchanger 9'.

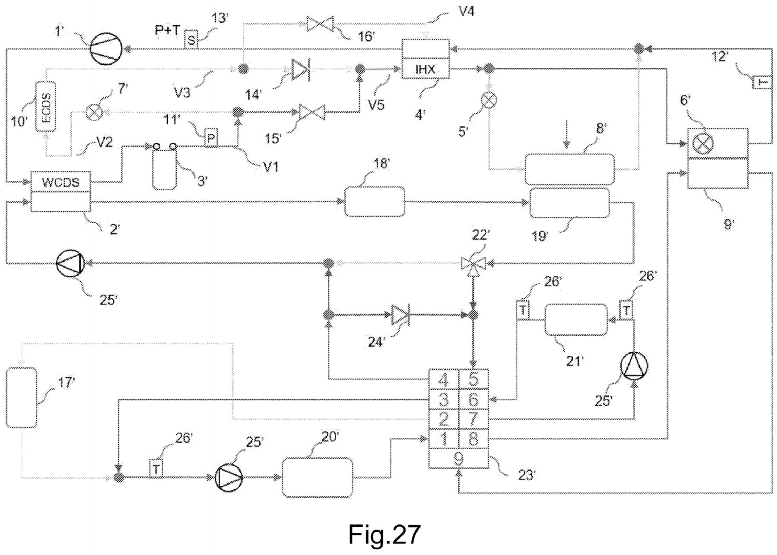

As shown in Fig. 27, the thermal management system is in an HVWH electric motor heating/electric motor waste heat cabin heating mode. In this mode, the nine-way valve 23' of the cooling liquid circuit is in the sixth operating state, the first stop valve 15' is open (the first port V1 and the fifth port V5 are connected to each other), the expansion valve 7' is closed (the second port V2 is closed), the second stop valve 16' is closed, and the one-way valve 14' is closed. In addition, the third heat exchanger 9' is working, but the evaporator 8' is not working, and the low-temperature radiator 17' is bypassed. The water heater 18' may be working to heat an electric motor, or heat of the electric motor assembly 20' may be used for heating a passenger cabin.

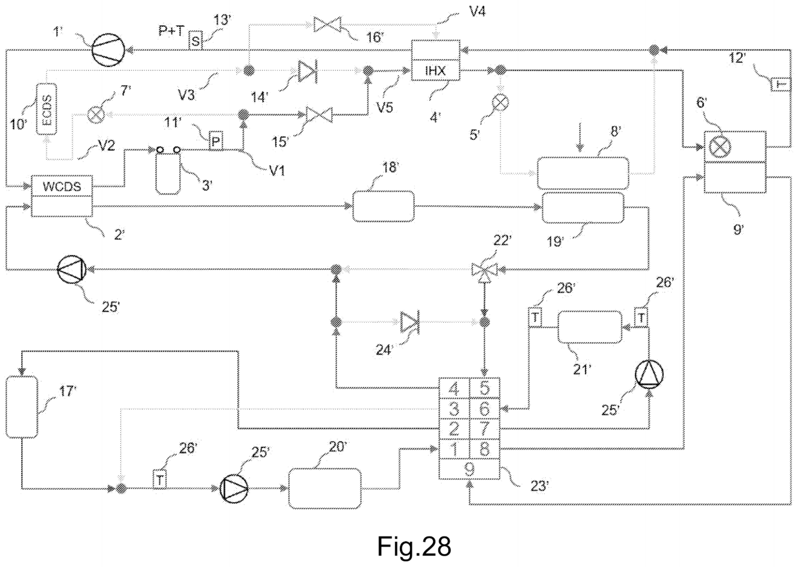

As shown in Fig. 28, the thermal management system is in an HVWH battery heating mode. In this mode, the nine-way valve 23' of the cooling liquid circuit is in the fourth operating state, the first stop valve 15' is open (the first port V1 and the fifth port V5 are connected to each other), the expansion valve 7' is closed (the second port V2 is closed), the second stop valve 16' is closed, and the one-way valve 14' is closed. In addition, the third heat exchanger 9' is working, and the evaporator 8' is not working. The water heater 18' is connected in series to the battery assembly 21', and therefore may be used for heating the battery.

As described above, a thermal management system with the valve system shown in Fig. 2 has simple connections, may realize various heat management modes, and further may realize efficient thermal management in a vehicle fast charging mode, with improved cooling performance.

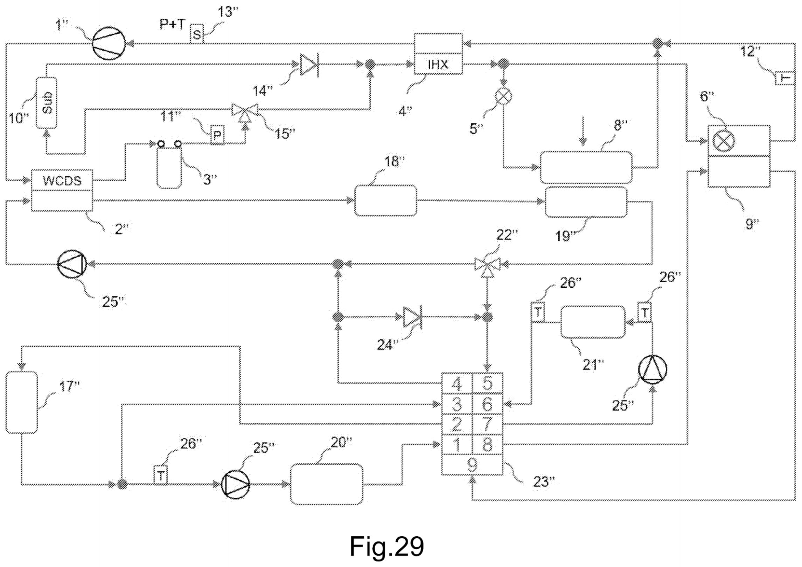

Regarding the thermal management system shown in Fig. 16, Fig. 29 shows a modification. The refrigerant circuit shown in Fig. 29 likewise may have a compressor 1", a first heat exchanger 2" that may be a water-cooled condenser (WCDS), an intermediate heat exchanger (IHX) 4", an evaporator 8", a drying bottle 3", valves 5" and 6", and sensors (S or P or T) 11", 12", 13". The cooling liquid circuit shown in Fig. 29 likewise may comprise a first heat exchanger 2", a water heater 18", a warm air apparatus 19", multiple pumps 25", a three-way valve 22", an electric motor assembly 20", a cooling liquid one-way valve 24", a low-temperature radiator 17", a battery assembly 21", a third heat exchanger 9" (e.g. a chiller) and a sensor (T) 26". In addition, the cooling liquid circuit also comprises a nine-way valve 23", which has nine ports marked 1 to 9. The nine-way valve 23" also has the six operating states as described above. The differences between the thermal management system shown in Fig. 29 and the thermal management system shown in Fig. 16 mainly lie in a cooling apparatus being used instead of an evaporator-condenser; that is, the second heat exchanger 10" in Fig. 29 may only be used as a condenser and not as an evaporator. In addition, the refrigerant circuit in Fig. 29 uses a three-way valve 15" and not the stop valve 15' and the expansion valve 7' in Fig. 16, and the refrigerant circuit in Fig. 29 is not provided with a flow path that connects to an inlet of a low-pressure side of the intermediate heat exchanger 4". The thermal management system shown in Fig. 29 also may realize various thermal management modes, and in particular has an ultrafast charging mode.

As described above, the thermal management system of the present disclosure is able to realize a large number of modes using simple pipeline connections, and modes can be switched conveniently and freely. In addition, by using the valve system described above, a first heat exchanger, a second heat exchanger and an intermediate heat exchanger are connected in a refrigerant circuit, and the thermal management system of the present disclosure may realize efficient thermal management in a vehicle fast charging mode, with improved cooling performance.

The technical features disclosed above are not limited to the disclosed combinations with other features, and those skilled in the art could make other combinations of technical features according to the objective of the invention, to achieve the objective of the present disclosure.

## Claims

1. A valve system, **characterized in that** the valve system (100) comprises an expansion valve (101), a valve module (102), a first port (V1), a second port (V2), a third port (V3), a fourth port (V4) and a fifth port (V5), wherein
a first flow path (L1) is provided between the first port (V1) and the second port (V2); the expansion valve (101) is arranged on the first flow path (L1);
the valve module (102) is respectively connected to the third port (V3), the fourth port (V4) and the fifth port (V5), and is further connected to the first port (V1).

2. The valve system as claimed in claim 1, **characterized in that** a first junction point (103) is provided on the first flow path (L1); the valve module (102) is connected to the first junction point (103), and is connected to the first port (V1) by means of the first junction point (103).

3. The valve system as claimed in claim 2, **characterized in that** the first junction point (103) is located between the expansion valve (101) and the first port (V1).

4. The valve system as claimed in claim 1, **characterized in that** a second flow path (L2) is further provided between the first port (V1) and the second port (V2); the second flow path (L2) is connected in parallel to the first flow path (L1), and, with the first flow path (L1), is respectively connected to two sides of the expansion valve (101);
the valve module (102) is arranged on the second flow path (L2).

5. The valve system as claimed in claim 4, **characterized in that** a first junction point (103) and a second junction point (104) are provided on the first flow path (L1); and the first junction point (103) and the second junction point (104) are respectively located at two sides of the expansion valve (101);
the second flow path (L2) and the first flow path (L1) are respectively connected to the first junction point (103) and the second junction point (104).

6. The valve system as claimed in claim 5, **characterized in that** the second junction point (104) coincides with the second port (V2).

7. The valve system as claimed in claim 1 or 2, **characterized in that** the valve module (102) is a multi-way valve.

8. The valve system as claimed in claim 1, **characterized in that** the valve module (102) comprises a first stop valve (108, 15'), a second stop valve (109, 16'), a third junction point (105), a fourth junction point (106) and a one-way valve (110, 14'),
wherein the first stop valve (108, 15') is arranged between the first port (V1) and the third junction point (105); the third junction point (105) is connected to the fifth port (V5);
the second stop valve (109, 16') is arranged between the fourth port (V4) and the fourth junction point (106); the fourth junction point (106) is connected to the third port (V3); and
the one-way valve (110, 14') is arranged between the third junction point (105) and the fourth junction point (106), and allows fluid to flow in one direction from the fourth junction point (106) toward the third junction point (105).

9. The valve system as claimed in claim 1, **characterized in that** the valve module (102) comprises a first three-way valve (111), an intermediate junction point (107) and a second three-way valve (112);
three ports of the first three-way valve (111) are respectively connected to the first port (V1), the second port (V2) and the intermediate junction point (107);
the intermediate junction point (107) is connected to the fifth port (V5);
three ports of the second three-way valve (112) are respectively connected to the intermediate junction point (107), the third port (V3) and the fourth port (V4).

10. A thermal management system, comprising a first heat exchanger (2, 2'), a second heat exchanger (4, 10') and an intermediate heat exchanger (8, 4'), **characterized in that** the thermal management system comprises the valve system as claimed in any one of claims 1 to 9, wherein
the first port (V1) of the valve system is connected to an outlet of the first heat exchanger (2, 2');
the second port (V2) of the valve system is connected to an inlet of the second heat exchanger (4, 10');
the third port (V3) of the valve system is connected to an outlet of the second heat exchanger (4, 10');
the fourth port (V4) of the valve system is connected to an inlet of a low-pressure side of the intermediate heat exchanger (8, 4'); and
the fifth port (V5) of the valve system is connected to an inlet of a high-pressure side of the intermediate heat exchanger (8, 4').
